# EUROPÄISCHE PATENTSCHRIFT

(11) **EP 0 699 708 B1**
(45) Veröffentlichungstag und Bekanntmachung des Hinweises auf die Patenterteilung: **19.04.2000**
(21) Anmeldenummer: 95112917.0
(22) Anmeldetag: 17.08.1995
(51) Int. Cl.: C08K 5/5313, C08L 67/02

(54) **Flammgeschützte Polyesterformmassen**
Flame retardant polyester moulding compositions
Masses à mouler ignifugées à base de polyester

(30) Priorität: 31.08.1994 DE 4430932
(43) Veröffentlichungstag der Anmeldung: 06.03.1996
(60) Teilanmeldung: 99111486.9
(73) Patentinhaber: Ticona GmbH, 65451 Kelsterbach (DE)
(72) Erfinder: Kleiner, Hans-Jerg, Dr., D-61476 Kronberg (DE); Budzinsky, Winfried, D-65812 Bad Soden (DE); Kirsch, Günther, Dr., D-65812 Bad Soden (DE)

(56) Entgegenhaltungen:
- EP-A- 0 006 568
- DE-A- 2 102 841
- FR-A- 2 204 659
- FR-A- 2 422 698
- US-A- 3 594 347
- CHEMICAL ABSTRACTS, vol. 85, no. 10, 6.September 1976 Columbus, Ohio, US; abstract no. 64058, XP002002002 & JP-A-51 047 035 (TEIJIN LTD.) 22.April 1976

## Beschreibung

Die Erfindung betrifft flammgeschützte Polyesterformmassen, die Calcium- oder Aluminiumphosphinate enthalten.

Polymere werden häufig dadurch flammfest gemacht, daß man diesen phosphorhaltige oder halogenhaltige Verbindungen oder Gemische davon zusetzt. Einige Polymere werden bei hohen Temperaturen, z.B. bei 250°C oder höheren Temperaturen verarbeitet. Aus diesem Grund eignen sich viele bekannte Flammhemmer nicht für solche Anwendungen, weil sie zu flüchtig oder nicht ausreichend hitzebeständig sind.

Alkalisalze von Phosphinsäuren sind thermisch stabil und bereits als flammhemmende Zusätze für Polyester vorgeschlagen (DE-A1-2 252 258). Sie müssen in Mengen bis zu 30 Gew.-% eingebracht werden und haben zum Teil einen ungünstigen korrosionsfördernden Einfluß auf die Verarbeitungsmaschinen.

Weiterhin sind die Salze von Phosphinsäuren mit einem Alkalimetall oder einem Metall aus der zweiten oder dritten Haupt- oder Nebengruppe des Periodensystems zur Herstellung flammwidriger Polyamid-Formmassen eingesetzt worden, insbesondere die Zinksalze (DE-A1-2 447 727). Schwerentflammbare Thermoplaste lassen sich auch herstellen durch den Einsatz der genannten Phosphinsäuresalze in Kombination mit Stickstoffbasen wie Melamin, Dicyandiamid oder Guanidin (DE-A1-28 27 867).

Eine weitere große Klasse von Phosphinsäuresalzen sind die polymeren Metallphosphinate. Diese stellen nichtionische Koordinationskomplexe dar und sind in organischen Lösungsmitteln löslich. Sie sind als Flammschutzkomponenten geeignet für halogenierte aromatische Polymere sowie für Polyester (US 40 78 016; US 4180495), Polyamide (US 42 08 321) und Polyester/Polyamide (US 42 08 322). Nachteilig ist die im allgemeinen schwierige technische Herstellung dieser Metallphosphinatpolymeren.

Es wurde nun überraschenderweise gefunden, daß Calcium- und Aluminiumsalze von Phosphin- oder Diphosphinsäuren eine ausgezeichnete flammenhemmende Wirkung in Polyester-Kunststoffen zeigen, während andere Metallsalze der gleichen Phosphin- oder Diphosphinsäuren eine wesentlich schlechtere flammhemmende Wirkung ergeben.

Gegenstand der Erfindung ist somit eine Polyesterformmasse, die ein Phosphinsäuresalz der Formel (I) und/oder ein Diphosphinsäuresalz der Formel (II) und/oder deren Polymere 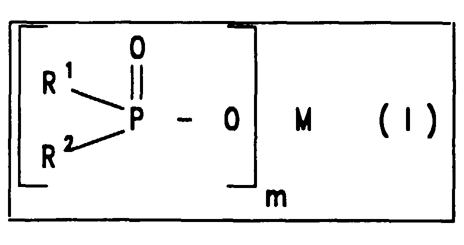 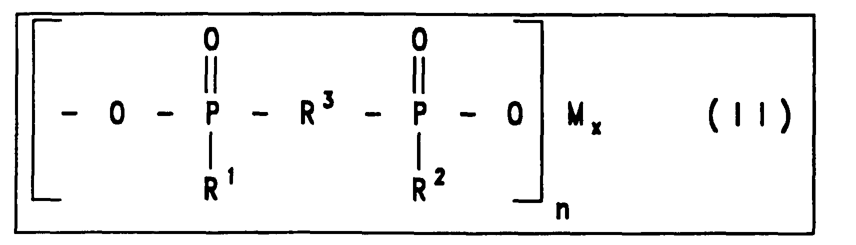 enthält, worin
- R¹, R²: C₁-C₆-Alkyl, vorzugsweise C₁-C₄-Alkyl, linear oder verzweigt, z.B. Methyl, Ethyl, n-Propyl, iso-Propyl, n-Butyl, tert.-Butyl, n-Pentyl; Phenyl;
- R³: C₁-C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen;
Arylen, z.B. Phenylen, Naphthylen;
Alkylarylen, z.B. Methyl-phenylen, Ethyl-phenylen, tert.-Butyl-phenylen, Methyl-naphthylen, Ethyl-naphthylen, tert.-Butyl-naphthylen;
Arylalkylen, z.B. Phenyl-methylen, Phenyl-ethylen, Phenyl-propylen, Phenyl-butylen;
- M: Calcium-, Aluminium-Ionen;
- m: 2 oder 3;
- n: 1 oder 3;
- x: 1 oder 2
bedeuten.

Polyester sind Polymere, die wiederholende, über eine Estergruppe verbundene Einheiten in der Polymerkette enthalten. Polyester, die erfindungsgemäß eingesetzt werden können, sind beispielsweise in "Ullmann's encyclopedia of industrial chemistry, ed. Barbara Elvers, Vol. 21A, Kapitel 'Polyesters' (S. 227-251), VCH, Weinheim-Basel-Cambridge-New York 1992" beschrieben, worauf ausdrücklich Bezug genommen wird.

Im folgenden bezeichnet der Begriff "Phosphinsäuresalz" Salze der Phosphin- und Diphosphinsäuren und deren Polymere.

Die erfindungsgemäßen Phosphinsäuresalze, die in wäßrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der erfindungsgemäßen Phosphinsäuresalze sind beispielsweise:
Dimethylphosphinsäure, Ethyl-methylphosphinsäure, Diethylphosphinsäure, Methyl-n-propyl-phosphinsäure, Methan-di(methylphosphinsäure), Ethan-1,2-(dimethylphosphinsäure), Hexan-1,6-di(dimethylphosphinsäure), Benzol-1,4-(dimethylphosphinsäure), Methyl-phenyl-phosphinsäure, Diphenylphosphinsäure.

Die Salze der Phosphinsäuren gemäß der Erfindung können nach bekannten Methoden hergestellt werden. Die Phosphinsäuren werden dabei in wäßriger Lösung mit Metallcarbonaten, Metallhydroxiden oder Metalloxiden umgesetzt.

Die Menge des den Polymeren zuzusetzenden Phosphinsäuresalzes der allgemeinen Formel I oder des Diphosphinsäuresalzes der Formel II kann innerhalb weiter Grenzen variieren. Im allgemeinen verwendet man 5 bis 30 Gew.-%, bezogen auf das Polymer. Die optimale Menge hängt von der Natur des Polymeren und der Art des eingesetzten Phosphinsäuresalzes ab und kann durch Versuche leicht bestimmt werden.

Die Phosphinsäuresalze gemäß der Erfindung können je nach Art des verwendeten Polymeren und der gewünschten Eigenschaften in verschiedener physikalischer Form angewendet werden. So können die Phosphinsäuresalze z.B. zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze gemäß der Erfindung sind thermisch stabil, zersetzen die Polymeren weder bei der Verarbeitung noch beeinflußen sie den Herstellprozess der Polyesterformmasse. Die Phosphinsäuresalze sind unter Herstellungs- und Verarbeitungsbedingungen für Polymere nicht flüchtig.

Das Phosphinsäuresalz kann in das Polymer eingearbeitet werden, indem beides vermischt und anschließend in einem Compoundieraggregat (z.B. Zweischneckenextruder) das Polymer aufgeschmolzen und das Phosphinsäuresalz in der Polymerschmelze homogenisiert wird. Die Schmelze kann als Strang abgezogen, gekühlt und granuliert werden. Das Phosphinsäuresalz kann auch direkt in das Compoundieraggregat dosiert werden.

Es ist ebenso möglich, die flammhemmenden Zusätze einem fertigen Polyestergranulat beizumischen und direkt auf einer Spritzgießmaschine zu verarbeiten oder vorher in einem Extruder aufzuschmelzen, zu granulieren und nach einem Trocknungsprozeß zu verarbeiten.

Der flammhemmende Zusatz kann auch während der Polykondensation zugegeben werden.

Den Einstellungen können neben den erfindungsgemäßen Phosphinsäuresalzen auch Füll- und Verstärkungsstoffe wie Glasfasern, Glaskugeln oder Mineralien wie Kreide zugesetzt werden. Daneben können die Produkte andere Zusätze wie zum Beispiel Stabilisatoren, Gleitmittel, Farbmittel, Nucleierungsmittel oder Antistatika enthalten.

Die erfindungsgemäßen flammfesten Polyester eignen sich zur Herstellung von Formkörpern, Filmen, Fäden und Fasern, z.B. durch Spritzgießen, Extrudieren oder Verpressen.

### Beispiele

### 1. Herstellung von Phosphinsäuresalzen

1.1 Herstellung des Calciumsalzes der Ethyl-methylphosphinsäure
   1630 g (15,1 Mol) Ethyl-methylphosphinsäure werden in 3 l Wasser gelöst und 422,8 g (7,55 Mol) Calciumoxid (ungelöschter Kalk) portionsweise unter lebhaftem Rühren eingetragen in 1,5 Stunden, die Temperatur steigt auf 75°C. Dann wird weiter Calciumoxid eingetragen, bis eine in die Lösung eingeführte pH-Elektrode pH = 7 anzeigt. Nun wird etwas Aktivkohle zugegeben und 1,5 Stunden am Rückfluß gerührt und dann filtriert. Das Filtrat wird zur Trockene eingedampft und bei 120°C bis zu Gewichtskonstanz im Vakuum-Trockenschrank getrocknet. Man erhält 1920 g eines weißen Pulvers, das bis 300°C nicht schmilzt. Ausbeute 100 % der Theorie.
1.2 Herstellung des Aluminiumsalzes der Ethyl-methylphosphinsäure
   2106 g (19,5 Mol) Ethyl-methylphosphinsäure werden in 6,5 l Wasser gelöst und 507 g (6,5 Mol) Aluminiumhydroxid unter lebhaftem Rühren zugegeben, dabei wird auf 85°C erwärmt. Insgesamt wird 65 Stunden bei 80 - 90°C gerührt, dann wird auf 60°C abgekühlt und abgesaugt. Man erhält nach Trocknung im Vakuum-Trockenschrank bei 120°C bis zur Gewichtskonstanz 2140 g eines feinkörnigen Pulvers, das bis 300°C nicht schmilzt. Ausbeute: 95 % der Theorie.
1.3 Herstellung des Calciumsalzes der Ethan-1,2-bismethylphosphinsäure
   325,5 g (1,75 Mol) Ethan-1,2-bismethylphosphinsäure werden in 500 ml Wasser gelöst und 129,5 g (1,75 Mol) Calciumhydroxid portionsweise unter lebhaftem Rühren in einer Stunde eingetragen. Dann wird einige Stunden bei 90 - 95°C gerührt, abgekühlt und abgesaugt. Man erhält 335 g nach Trocknung im Vakuum-Trockenschrank bei 150°C. Das Produkt schmilzt bis 380°C nicht. Ausbeute: 85 % der Theorie.
1.4 Herstellung des Aluminiumsalzes der Ethan-1,2-bismethylphosphinsäure
   334,8 g (1,8 Mol) Ethan-1,2-bismethylphosphinsäure werden in 600 ml Wasser gelöst und 93,6 g (1,2 Mol) Aluminiumhydroxid portionsweise unter lebhaftem Rühren in einer Stunde eingetragen. Dann wird 24 Stunden unter Rückfluß gehalten und anschließend heiß abgesaugt und mit Wasser gewaschen. Man erhält nach Trocknung 364 g eines weißen Pulvers, das bis 380°C nicht schmilzt. Ausbeute: 100 % der Theorie.
1.5 Herstellung des Calciumsalzes der Methyl-propylphosphinsäure
   366 g (3,0 Mol) Methyl-propylphosphinsäure werden in 600 ml Wasser gelöst und 84 g (1,5 Mol) Calciumoxid portionsweise unter lebhaftem Rühren eingetragen, dabei steigt die Temperatur auf 65°C. Nun wird bei dieser Temperatur gehalten, bis eine klare Lösung entsteht. Nun wird zur Trockene im Vakuum eingedampft. Man erhält nach Trocknung des Rückstandes bei 120°C im Vakuum-Trockenschrank 364 g. Ausbeute: ca. 85 % der Theorie.

### 2. Herstellung und Prüfung von flammhemmenden Polyester

Die phosphorhaltigen Verbindungen wurden mit dem Polymeren vermischt und auf einem handelsüblichen Zweiwellen-Compounder eingearbeitet. Bei glasfaserverstärkten Einstellungen wurden für Polyester handelsübliche Glasfasern in die Schmelze dosiert.

Die Massetemperaturen bei der Compoundierung betrugen bei Polybutylenterephthalat (PBT) ca. 250°C, bei Polyethylenterephthalat (PET) ca. 270°C.

Die Probekörper wurden auf einer Spritzgießmaschine nach ISO 7792-2 hergestellt.

An Probekörper aus jeder Mischung wurden die Brandklasse UL 94 (Underwriter Laboratories) an Probekörpern der Dicke 1,2 mm bestimmt und Reißfestigkeit und Bruchdehnung nach ISO 527 ermittelt.

Nach UL 94 ergeben sich folgende Brandklassen:
- V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
- V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0
- V-2: Zündung der Watte durch brennendes Abtropfen, übrige Kriterien wie bei V-1
< V-2 erfüllt nicht die Brandklasse V-2.
2.1.1 Aus PBT und dem Calciumsalz der Ethylmethylphosphinsäure in verschiedenen Konzentrationen wurden mit 30 % Glasfasern verstärkte Compounds ohne weitere Zusätze hergestellt, Prüfkörper gespritzt und mit folgendem Ergebnis geprüft:

| Konzentration Ca-Salz / % | Brandklasse UL 94 | Reißfestigkeit / Nmm⁻² | Bruchdehnung / % |
|---|---|---|---|
| 20 | V-0 | 130 | 2,4 |
| 17,5 | V-0 | 134 | 2,7 |
| 15 | V-2 | 139 | 3,0 |
| 12,5 | < V-2 | 140 | 3,1 |

2.1.2 Entsprechend mit dem Calciumsalz der Propylmethylphosphinsäure (Polymer: PBT):

| Konzentration Ca-Salz % | Brandklasse UL 94 V-0 | Reißfestigkeit N/mm² | Bruchdehnung % |
|---|---|---|---|
| 20 | V-0 | 133 | 2,2 |

2.2 Wie bei Beispiel 2.1.1 wurde mit dem Aluminiumsalz der Ethylmethylphosphinsäure verfahren (Polymer: PBT).

| Konzentration Al-Salz % | Brandklasse UL 94 | Reißfestigkeit N/mm² | Bruchdehnung % |
|---|---|---|---|
| 20 | V-0 | 115 | 2,0 |
| 17,5 | V-1 | 120 | 1,9 |
| 15 | V-2 | 130 | 2,1 |
| 12,5 | V-2 | 135 | 2,5 |

Bei Zugabe von 20 % der phosphorhaltigen Verbindung wird die Brandklasse UL 94 V-0 eingestellt, bei 17,5 % nur noch UL 94 V-1 erreicht.
2.3 (Vergleichsbeispiel)
Es wird der Einfluß des in der deutschen Anmeldung DE-A1-2 252 258 erwähnten Natriumsalzes der Ethylmethylphosphinsäure auf die Flammfestigkeit von PBT gezeigt:

| Konzentration Na-Salz % | Brandklasse UL 94 | Reißfestigkeit N/mm² | Bruchdehnung % |
|---|---|---|---|
| 30 | V-0 | 40 | 0,4 |
| 20 | < V-2 | 70 | 1,0 |
| 15 | < V-2 | 93 | 1,5 |
| 10 | < V-2 | 116 | 1,7 |

Von dieser Verbindung sind 30 % erforderlich, um UL 94 V-0 zu erreichen; bei einer Konzentration von 20 % wird die Brandklasse UL 94 V-2 nicht mehr erfüllt. Die flammhemmende Wirkung dieser Verbindung ist erheblich geringer als die der in den Beispielen 1 und 2 erwähnten erfindungsgemäßen Verbindungen. Daneben ergeben sich im Vergleich zu den Einstellungen mit den erfindungsgemäßen Verbindungen sehr niedrige Reißfestigkeiten und Bruchdehnungen der gespritzten Prüfkörper, die in der Praxis nicht akzeptabel sind.
2.4 Bisher wurden Beispiele mit glasfaserverstärktem PBT angeführt. Beispiel 2.4 zeigt die Wirksamkeit der beanspruchten Verbindungen am Beispiel des Calciumsalzes der Ethylmethylphosphinsäure in unverstärktem PBT.

| | Konzentration Ca-Salz / % | Brandklasse UL 94 |
|---|---|---|
| Unverstärkt | 25 | V-0 |
| Unverstärkt | 20 | V-1 |

Bei unverstärkten Produkten ist eine höhere Einsatzmenge im Vergleich zu glasfaserverstärkten Einstellungen erforderlich, bei denen der Polymeranteil geringer ist.
2.5 Beispiel 2.5 zeigt die Wirksamkeit der beanspruchten Verbindungen in unverstärktem und verstärktem PET am Beispiel des Calciumsalzes der Ethylmethylphosphinsäure.

| | Konzentration Ca-Salz % | Brandklasse UL 94 |
|---|---|---|
| unverstärkt | 25 | V-0 |
| 30 % Glasfasern | 30 | V-0 |
| 30 % Glasfasern | 25 | V-0 |
| 30 % Glasfasern | 20 | V-0 |

## Patentansprüche

1. Polyesterformmasse, die ein Phosphinsäuresalz der Formel (I) und/oder ein Diphosphinsäuresalz der Formel (II) und/oder deren Polymere 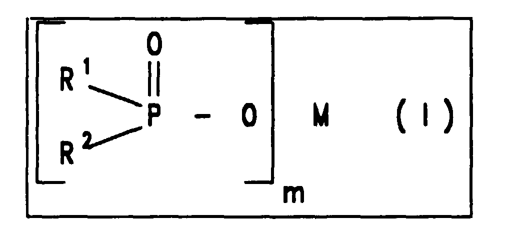 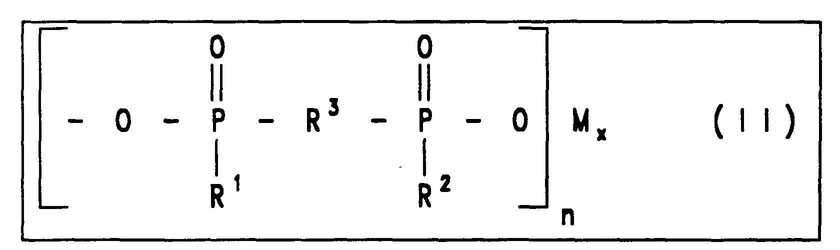 enthält, worin
R¹, R² C₁-C₆-Alkyl, linear oder verzweigt; Phenyl;
R³ C₁-C₁₀-Alkylen, linear oder verzweigt; Arylen; Alkylarylen; Arylalkylen;
M Calcium-, Aluminium-Ionen;
m 2 oder 3;
n 1 oder 3;
x 1 oder 2
bedeuten.

2. Polyesterformmasse nach Anspruch 1, dadurch gekennzeichnet, daß als Polyester Polybutylenterephthalat oder Polyethylenterephthalat enthalten ist.

3. Polyesterformmasse nach Anspruch 1 oder 2, dadurch gekennzeichnet, daß Calcium- oder Aluminiumsalze mindestens einer Phosphinsäure der Formel I oder mindestens einer Diphosphinsäure der Formel II enthalten sind.

4. Polyesterformmasse nach Anspruch 1 bis 3, dadurch gekennzeichnet, daß 5 bis 30 Gew.-% von Phosphinsäuresalzen der Formel I und/oder von Diphosphinsäuresalzen der Formel II und/oder von deren Polymeren enthalten sind.

5. Verwendung von Phosphinsäuresalzen der Formel I und/oder von Diphosphinsäuresalzen der Formel II und/oder von deren Polymeren als Flammschutzmittel für Polyesterformmassen.

6. Verwendung von Phosphinsäuresalzen der Formel I und/oder von Diphosphinsäuresalzen der Formel II und/oder deren Polymere als Flammschutzmittel für Formmassen, die Polyethylenterephthalat oder Polybutylenterephthalat enthalten.

## Claims

1. A polyester molding composition which comprises a phosphinic acid salt of the formula (I) and/or a diphosphinic acid salt of the formula (II) and/or a polymer thereof 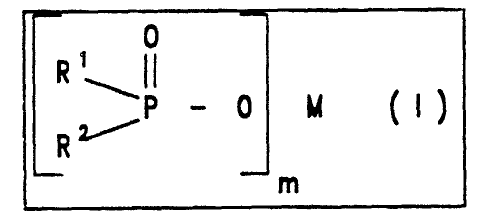 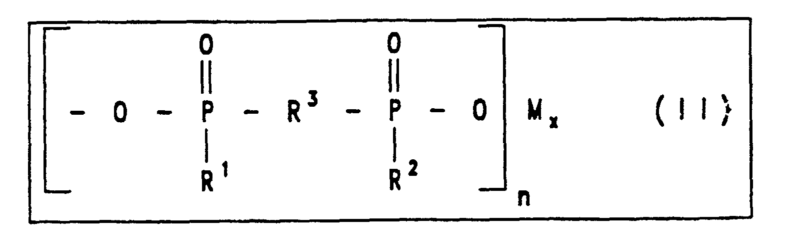 in which
R¹ and R² are C₁-C₆-alkyl, which is linear or branched; or phenyl;
R³ is C₁-C₁₀-alkylene, which is linear or branched; arylene; alkylarylene; or arylalkylene;
M is calcium or aluminum ions;
m is 2 or 3;
n is 1 or 3; and
x is 1 or 2.

2. A polyester molding composition as claimed in claim 1, which comprises polybutylene terephthalate or polyethylene terephthalate as the polyester.

3. A polyester molding composition as claimed in claim 1 or 2, which comprises a calcium or aluminum salt of at least one phosphinic acid of the formula I or at least one diphosphinic acid of the formula II.

4. A polyester molding composition as claimed in claims 1 to 3, which comprises 5 to 30 % by weight of a phosphinic acid salt of the formula I and/or of a diphosphinic acid salt of the formula II and/or of a polymer thereof.

5. The use of a phosphinic acid salt of the formula I and/or of a diphosphinic acid salt of the formula II and/or of a polymer thereof as a flameproofing agent for a polyester molding composition.

6. The use of a phosphinic acid salt of the formula I and/or of a diphosphinic acid salt of the formula II and/or of a polymer thereof as a flameproofing agent for a molding composition which comprises polyethylene terephthalate or polybutylene terephthalate.

## Revendications

1. Matière à mouler à base de polyester, qui contient un sel d'acide phosphinique de formule (I) et/ou un sel d'acide diphosphinique de formule (II) et/ou leurs polymères 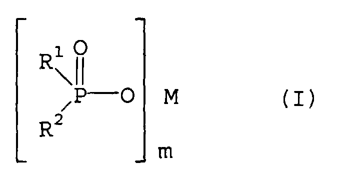 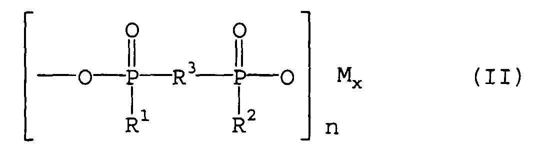 dans lesquelles
R¹, R² signifient un alkyle en C₁-C₆, linéaire ou ramifié; un phényle;
R³ signifie un alkylène en C₁-C₁₀, linéaire ou ramifié; un arylène; un alkylarylène; un arylalkylène;
M signifie des ions calcium, aluminium;
m signifie 2 ou 3;
n signifie 1 ou 3;
x signifie 1 ou 2.

2. Matière à mouler à base de polyester suivant la revendication 1, caractérisée en ce que du polybutylènetéréphtalate ou du polyéthylènetéréphtalate est présent en tant que polyester.

3. Matière à mouler à base de polyester suivant la revendication 1 ou 2, caractérisée en ce que des sels de calcium ou d'aluminium d'au moins un acide phosphinique de formule (I) ou d'au moins un acide diphosphinique de formule (II) sont présents.

4. Matière à mouler à base de polyester suivant la revendication 1 à 3, caractérisée en ce que 5 à 30% en poids de sels d'acide phosphinique de formule I et/ou de sels d'acide diphosphinique de formule II et/ou de leurs polymères sont présents.

5. Utilisation de sels d'acide phosphinique de formule I et/ou de sels d'acide diphosphinique de formule II et/ou de leurs polymères comme ignifugeant pour des matières à mouler à base de polyester.

6. Utilisation de sels d'acide phosphinique de formule I et/ou de sels d'acide diphosphinique de formule II et/ou de leurs polymères comme ignifugeant pour des matières à mouler, qui contiennent du polyéthylènetéréphtalate ou du polybutylènetéréphtalate.
